Europäisches Patentamt

European Patent Office

Office européen des brevets

(11) Veröffentlichungsnummer: **0 386 716**

**A1**

(12) **EUROPÄISCHE PATENTANMELDUNG**

(21) Anmeldenummer: 90104316.6

(22) Anmeldetag: 07.03.90

(51) Int. Cl.⁵ **A47F 5/02, A47F 5/11, G09F 19/02, F16M 11/12**

(30) Priorität: **10.03.89 DE 8902989 U**

(43) Veröffentlichungstag der Anmeldung:
**12.09.90 Patentblatt 90/37**

(84) Benannte Vertragsstaaten:
**AT BE CH DE FR LI NL**

(71) Anmelder: **GUSTAV STABERNACK GMBH**
**Dirlammer Strasse 22**
**D-6420 Lauterbach/Hessen 1(DE)**

(72) Erfinder: **Schmitt, Paul**
**Waldstr. 31**
**6420 Lauterbach(DE)**

(74) Vertreter: **Gudel, Diether, Dr. et al**
**Patentanwälte Dr. V. Schmied-Kowarzik**
**Dipl.-Ing. G. Dannenberg Dr. P. Weinhold Dr.**
**D. Gudel Dipl.-Ing. S. Schubert Dr. P. Barz**
**Grosse Eschenheimer Strasse 39**
**D-6000 Frankfurt am Main 1(DE)**

(54) **Drehständer.**

(57) Drehständer mit einem Fuß (A) mit einer senkrechten Säule (B), an deren Oberseite ein Drehlager (C) vorgesehen ist, über das ein Ständer (D) zur Aufnahme und Darbietung von Waren um eine Achse drehfest angeordnet ist, wobei zur Ausbildung des Drehlagers (C) ein Säulenteil (C1) einen ebenen Plattenabschnitt (E)(1) aufweist, an dessen Kante ein umlaufender (C2) Rand (2) angeformt ist derart, daß das Säulenteil durch Aufsetzen auf die Säule (B) an dieser befestigt wird, wobei der Kugelteil als Hohlkugelabschnitt (3) etwa mittig an den Plattenabschnitt (C)(1) angeformt ist, und das plattenförmige Ständerteil ebenfalls etwa mittig eine Aufnahme (5) mit abgerundetem Profil für das Kugelteil (3) des Säulenteils aufweist.

Fig.1

EP 0 386 716 A1

# Drehständer

Die Erfindung betrifft einen Drehständer mit einem Fuß mit einer senkrechten Säule, an deren Oberseite ein Drehlager vorgesehen ist, über das ein Ständer zur Aufnahme und Darbietung von Waren, vorzugsweise aus Faltmaterial und/oder Tiefziehmaterial, um eine lotrechte Achse drehbar angeordnet ist, wobei das Drehlager ein Säulenteil aus Kunsttoff mit dem Profil etwa eines Kugelteils aufweist, das an der Oberseite befestigt ist, sowie ein mit dem Säulenteil zusammenwirkendes, plattenformiges Ständerteil, das mit dem Ständer verbunden ist und das auf die Oberseite des Säulenteils aufgelegt ist.

Derartige Drehständer sind sehr vielseitig einsetzbar, insbesondere weil sie mit den verschiedensten Waren bestückt werden können, wobei dann der Käufer durch Drehen der Ständer die Waren betrachten und aussuchen kann.

Ein Drehständer mit den eingangs genannten Merkmalen ist bekannt (vgl. DE-U-88 00 320.5). Das Drehlager wird dort von einer Lagernoppe gebildet, die an eine Platte angeformt ist, die auf die Oberseite der Säule aufgeklebt ist. In den Ständer ist ein doppelwandiges Pappstück, ggf. mit einem Loch, eingesetzt, das auf die Lagernoppe aufgesetzt wird, so daß das Pappstück sich relativ zur Lagernoppe drehen kann und damit der Ständer relativ zum Fuß des Drehständers.

Nachteilig hieran ist es insbesondere, daß bei durchgehendem Pappstück die Drehachse nicht definiert ist, weil die Lagernoppe am flachen Pappstück anliegt. Auch wenn man zur Vermeidung dieses Nachteils das Pappstück mit einem Loch versieht, so ergeben sich Schwierigkeiten, weil sich dann die Lagernoppe bzw. die Spitze mit der Zeit in das Material des Pappstücks einarbeitet und dieses zerstört.

Würde man zur Beseitigung dieses Nachteils anstelle des Pappstücks ein Blech- oder Kunststoffstück nehmen, so würde sich das Drehlager, bedingt durch das Loch, festfressen bzw. die Drehachse wäre auch hier nicht definiert.

Zum Stand der Technik wird auch auf die CH-A-306 805 verwiesen, bei der das Drehlager eines Drehständers aus einer Spitze besteht, über die eine Lagerbüchse geschoben ist, die in einen massiven Deckel eingesetzt ist. Dies ist kunstruktiv aufwendig und trotzdem kann sich die Spitze in die Büchse einarbeiten.

Der Erfindung liegt daher die Aufgabe zugrunde, den bekannten Drehständer so auszugestalten, daß dessen Drehlager trotz Vereinfachung in der Konstruktion und Herstellung funtionssicher ausgebildet ist.

Zur Lösung dieser Aufgabe ist die Erfindung dadurch gekennzeichnet, daß das Säulenteil aus Tiefziehmaterial geformt ist und einen ebenen Plattenabschnitt aufweist, an dessen Kante ein umlaufender Rand angeformt ist derart, daß das Säulenteil durch Aufsetzen auf die Säule an dieser befestigt wird, wobei der Kugelteil als Hohlkugelabschnitt etwa mittig an den Plattenabschnitt angeformt ist, und daß das plattenförmige Ständerteil ebenfalls etwa mittig eine Aufnahme mit abgerundetem Profil für das Kugelteil des Säulenteils aufweist, wobei die Abrundung der Aufnahme des Ständerteils flacher ist als das Profil der in der Aufnahme befindlichen Erhebung des Kugelteils des Säulenteils.

Das Säulenteil des Drehlagers kann also preisgünstig und in hohen Stückzahlen aus Tiefziehmaterial hergestellt werden. Es braucht nicht mehr in der Säule verklebt zu werden, sondern es genügt, das Säulenteil auf die Oberseite der Säule aufzusetzen, wo es unverlierbar gehalten wird, weil ja das Gewicht des Ständers vom Säulenteil aufgenommen wird und das Säulenteil wegen des umlaufenden Randes nicht seitlich von der Säule abrutschen kann. Mit dem Säulenteil arbeitet das Ständerteil zusammen, dessen Aufnahme zusammen mit dem Profil des Säulenteils die Drehachse des Drehlagers definiert derart, daß bei einem Drehen des Ständers diese Drehachse stets selbsttätig wieder eingenommen wird. Weil die Abrundung der Aufnahme des Ständerteils flacher ist als das Profil der Erhebung des Kugelteils des Säulenteils, sind beide Teile sehr leicht zueinander drehbar.

Der Plattenabschnitt des Säulenteils ist vorzugsweise quadratisch. Er kann aber auch rechtekkig oder sonstwie als vorzugsweise regelmäßiges Vielkant ausgebildet sein. Auch ist eine runde Profilierung möglich.

Aus Herstellungsgründen wird es ebenfalls bevorzugt, wenn auch das Ständerteil aus Tiefziehmaterial geformt ist.

Die Erfindung wird im folgenden anhand eines Ausführungsbeispiels näher erläutert, aus dem sich weitere wichtige Merkmale ergeben. Es zeigt:

Fig. 1 - eine geschnittene Seitenansicht des Drehlagers, wobei die beiden das Drehlager ausbildenden Teile zur Verdeutlichung voneinander beabstandet übereinander angeordnet sind, und zwar in einem Schnitt längs der Linien I-I von Fig. 2 bzw. Fig. 3;

Fig. 2 - eine Draufsicht auf das Säulenteil des Drehlagers und

Fig.3 - eine Draufsicht auf das Ständerteil des Drehlagers.

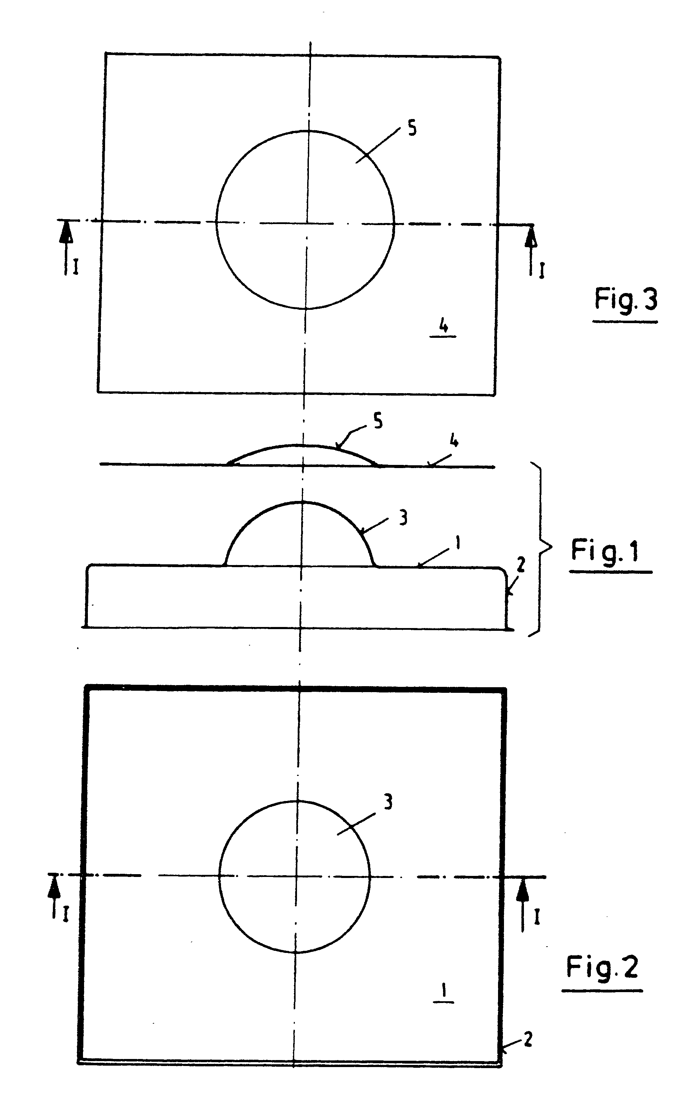

Die Figuren 1 und 2 lassen erkennen, daß das Säulenteil einen ebenen Plattenabschnitt 1 aufweist, das von einem umlaufenden Rand 2 abgeschlossen ist. Mittig ist ein Hohlkugelabschnitt 3 aus dem Tiefziehmaterial geformt, der vorzugsweise ein Kreisprofil hat.

Die Figuren 1 und 3 zeigen, daß das zugehörige Ständerteil aus einem Plattenabschnitt 4 besteht mit einer mittigen Vertiefung oder Aufnahme 5 für den Hohlkugelabschitt des Säulenteils. Fig. 1 zeigt auch, daß das Profil der Aufnahme 5 flacher ist als das Profil des Hohlkugelabschnitts 3.

**Ansprüche**

1. Drehständer mit einem Fuß mit einer senkrechten Säule, an deren Oberseite ein Drehlager vorgesehen ist, über das ein Ständer zur Aufnahme und Darbietung von Waren, vorzugsweise aus Faltmaterial und/oder Tiefziehmaterial, um eine lotrechte Achse drehbar angeordnet ist, wobei das Drehlager ein Säulenteil aus Kunststoff mit dem Profil etwa eines Kugelteils aufweist, das an der Oberseite der Säule befestigt ist, sowie ein mit dem Säulenteil zusammenwirkendes, plattenförmiges Ständerteil, das mit dem Ständer verbunden ist und das auf die Oberseite des Säulenteils aufgelegt ist,
**dadurch gekennzeichnet,**
daß das Säulenteil aus Tiefziehmaterial geformt ist und einen ebenen Plattenabschnitt (1) aufweist, an dessen Kante ein umlaufender Rand (2) angeformt ist derart, daß das Säulenteil durch Aufsetzen auf die Säule an dieser befestigt wird, wobei der Kugelteil als Hohlkugelabschnitt (3) etwa mittig an den Plattenabschnitt (1) angeformt ist, und daß das plattenförmige Ständerteil ebenfalls etwa mittig eine Aufnahme (5) mit abgerundetem Profil für das Kugelteil (5) des Säulenteils aufweist, wobei die Abrundung der Aufnahme (5) des Ständerteils flacher ist als das Profil der in der Aufnahme befindlichen Erhebung des Kugelteils (3) des Säulenteils.

2. Drehständer nach Anspruch 1,
**dadurch gekennzeichnet,**
daß der Plattenabschnitt (1) des Säulenteils quadratisch ist.

3. Drehständer nach Anspruch 1 oder 2,
**dadurch gekennzeichnet,**
daß auch das Ständerteil aus Tiefziehmaterial geformt ist.

4. Drehlager eines Drehständers nach einem der Ansprüche 1 bis 3.

EP 0 386 716 A1

Fig. 3

Fig. 1

Fig. 2

Europäisches
Patentamt

**EUROPÄISCHER RECHERCHENBERICHT**

Nummer der Anmeldung

EP 90 10 4316

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | DE-U-8 800 320 (HORST)<br>* Seite 4, Zeile 27 - Seite 5, Zeile 20; Seite 7, Zeile 17 - Seite 8, Zeile 5; Figuren 4,5 *<br>--- | 1-4 | A 47 F 5/02<br>A 47 F 5/11<br>G 09 F 19/02<br>F 16 M 11/12 |
| A | US-A-3 568 854 (WELCH)<br>* Spalte 1, Zeilen 29-38; Spalte 2, Zeilen 24-45; Figuren 3,4 *<br>--- | 1-4 | |
| A | EP-A-0 016 913 (NIXDORF)<br>* Kurzfassung; Figur 2 *<br>--- | 1-4 | |
| D,A | CH-A- 306 805 (KLÄY)<br>----- | | |

**RECHERCHIERTE SACHGEBIETE (Int. Cl.5)**

A 47 F
F 16 M
G 09 F
A 63 H

Der vorliegende Recherchenbericht wurde für alle Patentansprüche erstellt

| Recherchenort | Abschlußdatum der Recherche | Prüfer |
|---|---|---|
| DEN HAAG | 19-06-1990 | DE GROOT R.K. |